Europäisches Patentamt

European Patent Office

Office européen des brevets

(19)

(11) **EP 1 419 415 B1**

(12) **FASCICULE DE BREVET EUROPEEN**

(45) Date de publication et mention
de la délivrance du brevet:
**30.03.2005 Bulletin 2005/13**

(21) Numéro de dépôt: **02772466.5**

(22) Date de dépôt: **26.07.2002**

(51) Int Cl.⁷: $G02F\ 1/365$

(86) Numéro de dépôt international:
**PCT/FR2002/002697**

(87) Numéro de publication internationale:
**WO 2003/012545 (13.02.2003 Gazette 2003/07)**

(54) **SOURCE LASER ULTRABREVE COMPACTE A SPECTRE LARGE CONTROLE**

KOMPAKTE ULTRAKURZPULSLASERQUELLE MIT BREITEM KONTROLLIERBAREM
SPEKTRUM

CONTROLLED WIDE-SPECTRUM COMPACT ULTRABRIEF LASER SOURCE

(84) Etats contractants désignés:
**AT BE BG CH CY CZ DE DK EE ES FI FR GB GR
IE IT LI LU MC NL PT SE SK TR**

(30) Priorité: **27.07.2001 FR 0110134**

(43) Date de publication de la demande:
**19.05.2004 Bulletin 2004/21**

(73) Titulaire: **Amplitude Systèmes
33400 Talence (FR)**

(72) Inventeur: **MOTTAY, Eric
33130 Begles (FR)**

(74) Mandataire: **Michelet, Alain et al
Cabinet Harlé et Phélip
7, rue de Madrid
75008 Paris (FR)**

(56) Documents cités:
**US-A- 6 097 870        US-B1- 6 178 041
US-B1- 6 236 779**

EP 1 419 415 B1

**Description**

La présente invention concerne une source laser compacte ultrabrève à spectre large contrôlé.

Depuis la réalisation par Ippen et Shank en 1974 [Appl. Phys. Letters; **24**, (1974) 373] du premier laser émettant des impulsions plus courtes que la picoseconde (1 ps = = $10^{-12}$s), la durée des impulsions laser n'a cessé de raccourcir. Les lasers qui génèrent des impulsions dont la durée est inférieure à la picoseconde sont dénommés "Lasers ultrabrefs". Ils suscitent un vaste engouement et d'intenses efforts de recherche dans la communauté scientifique parce que les impulsions ultrabrèves qu'ils génèrent permettent l'étude temporelle de la dynamique de processus ultrarapides (inférieur à $10^{-10}$s) jusqu'-alors inaccessibles à la plupart des détecteurs. Avec ces sources de lumière ultrabrève, de nouveaux champs d'investigations et d'applications s'ouvrent comme dans les processus de fragmentation et/ou désorption de molécules adsorbées multiphotoniques, la métrologie, les études non destructives de mécanismes chimiques dans les cellules biologiques, etc..

La génération de signaux optiques ultrabrefs à large bande spectrale est devenue routinière. Les lasers utilisant comme milieu amplificateur un cristal de saphir dopé au titane ($Ti^{+3}:Al_2O_3$) et disponibles commercialement génèrent des impulsions ayant une durée approchant les 10 fs (1 fs = $10^{-15}$ s) ce qui correspond à une largeur spectrale de l'ordre de 100 THz (1 THz = $10^{12}$ Hz). Ces impulsions sont largement accordables au prix d'une modification ou d'un réglage du résonateur laser. Cependant, les lasers utilisant le saphir dopé Titane nécessitent pour fonctionner une source laser de pompe indépendante. Cette source est en général un laser ionique (Argon) ou un laser Nd:YAG pompé par diodes et doublé en fréquence. Cette source laser de pompe indépendante huit fortement à l'encombrement du système Laser et à la fiabilité de l'équipement. En outre, cette source rend le coût total d'un système laser ultrabref relativement cher.

On connaît, par ailleurs, des lasers générant des impulsions ultrabrèves faisant intervenir des milieux amplificateurs à ions terre rare (Ytterbium (Yb), Néodyme (Nd),..). Ces lasers présentent l'avantage de pouvoir être pompés directement par un laser semi-conducteur. Ils présentent donc des caractéristiques très attractives puisqu'ils sont compacts, fiables et peu onéreux. Cependant la largeur de fluorescence de tels milieux lasers limite fortement le spectre de l'impulsion émise et par conséquent la gamme spectrale sur laquelle le laser est accordable. Typiquement, pour un laser Yb:YAG, la largeur de fluorescence est de 6 nm (1 nm = $10^{-9}$ m), la largeur spectrale est d'environ 3 nm et il n'est pas facilement accordable. Ces chiffres sont à comparer avec ceux du Laser utilisant le Saphir dopé titane qui présente une largeur de fluorescence de 200 nm, une largeur spectrale supérieure à 100 nm et une plage d'accordabilité entre 750 et 950 nm.

Dans le brevet US 6,097,870, Ranka et al. ont montré la possibilité de réaliser l'élargissement spectral d'un flux lumineux pulsé par la mise en oeuvre d'une fibre à cristaux photoniques. Les pulses injectés dans ladite fibre, de longueur 75 cm, sont générés par une source laser et sont définis par une puissance crête supérieure à quelques centaines de watts. Ainsi, par couplage dans une fibre à cristaux photoniques, le spectre généré est-il le plus large possible et les mécanismes à l'origine de cet élargissement sont l'automodulation dé phase, l'émission Raman stimulée, l'amplification paramétrique, le mélange à 4 ondes et la création d'une onde de choc optique.

Or ces mécanismes physiques ne sont pas tous compris et l'élargissement du spectre n'est pas contrôlable tant en amplitude qu'en largeur spectrale. Il n'est pas possible par conséquent d'optimiser les conditions d'élargissement dudit spectre pour sélectionner au moyen d'un filtre une bande spectrale particulière ayant une intensité maximisée.

L'objectif de la présente invention est de proposer une source laser ultrabrève simple dans sa conception et dans son mode opératoire, compacte, peu onéreuse et permettant d'obtenir des impulsions à spectre large contrôlé tant en largeur que dans leur répartition spectrale en intensité.

A cet effet, l'invention concerne une source laser ultrabrève à spectre large telle que décrite dans la revendication 1.

Dans différents modes de réalisation possibles, la présente invention concerne également les caractéristiques qui ressortiront au cours de la description qui va suivre et qui devront être considérées isolément ou selon toutes leurs combinaisons techniquement possibles :

- la contribution à l'élargissement du spectre de l'auto-modulation de phase est de préférence supérieure à 80%,
- la longueur L de la fibre à cristaux photoniques vérifie $5 \leq L \leq 40$ cm et la densité de puissance du flux lumineux primaire incident est inférieure à 600 Gigawatts/cm$^2$,
- elle comporte un dispositif de sélection en longueur d'onde,
- le dispositif de sélection en longueur d'onde comprend un réseau de filtres interférentiels,
- ledit flux de largeur spectrale $\Delta\lambda_F$ présente des modulations en amplitude de période moyenne $\tau$ et la bande passante de chaque filtre est adaptée à cette période moyenne $\tau$,
- la source de pompe laser solide est un laser semi-conducteur,
- le matériau actif comprend des ions ytterbium,
- le matériau actif comprend des ions néodyme,

- la largeur spectrale $\Delta\lambda_F$ est comprise entre 10 et 400 nm,
- le diamètre $\phi$ des cavités, la longueur L et la section d de la fibre à cristaux photoniques, l'espacement entre les cavités sont pris tels que la dispersion du flux lumineux primaire centré sur la longueur d'onde $\lambda_L$ dans ladite fibre à cristaux photoniques est en valeur absolue inférieure à la dispersion d'une fibre optique homogène de même matériau et de longueur L pour la longueur d'onde $\lambda_L$,
- la dispersion du flux lumineux primaire centré sur la longueur d'onde $\lambda_L$ dans la fibre à cristaux photoniques est nulle.

L'invention concerne également un dispositif de mesure d'un échantillon par microscopie confocale multiphotonique comprenant :

- un microscope confocal comportant un objectif,
- une source de lumière émettant un flux lumineux,
- des moyens aptes à diriger ledit flux lumineux sur un échantillon au travers du microscope,
- des moyens de détection de l'intensité du flux lumineux produit par l'interaction du faisceau lumineux émis par la source de lumière sur l'échantillon et collecté par le microscope,
- des moyens de traitement du signal produit par les moyens de détection.

Selon l'invention, la source de lumière comprend une source laser telle que décrite précédemment.

L'invention sera décrite plus en détail en référence aux dessins annexés dans lesquels:

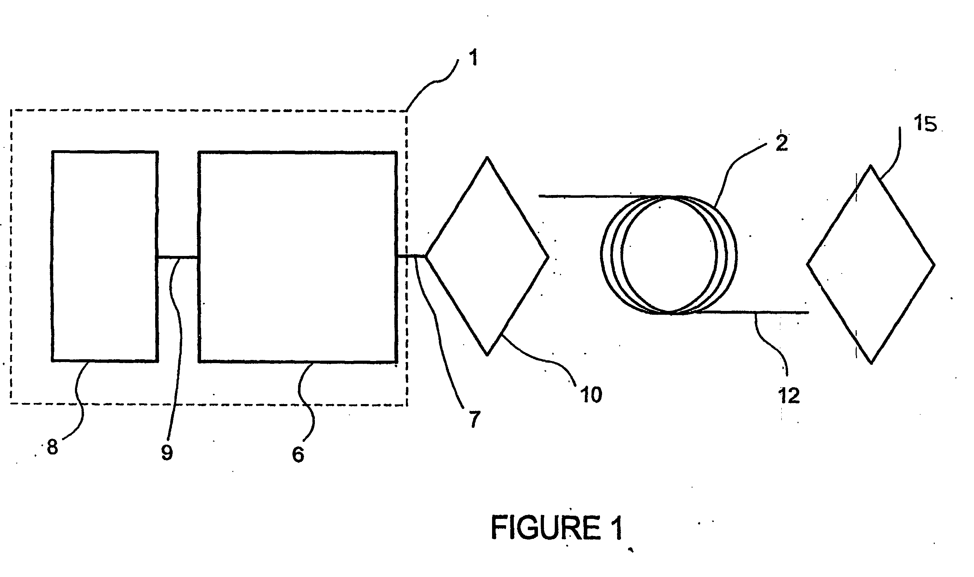

- la figure 1 est une représentation schématique d'une source laser ultrabrève, selon l'invention ;

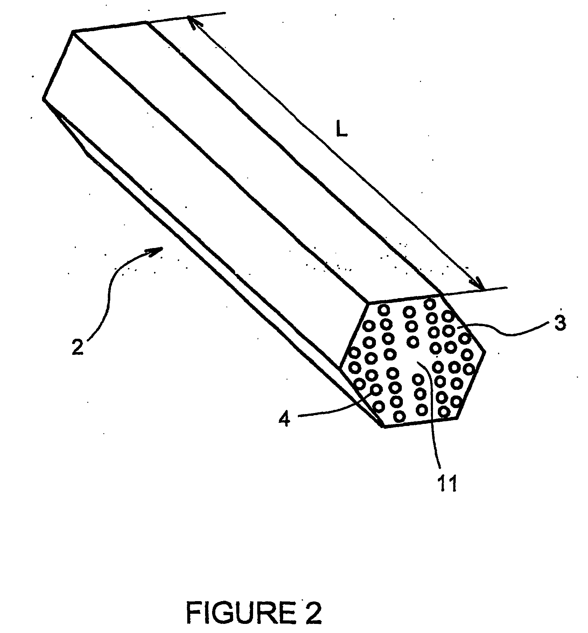

- la figure 2 est une représentation schématique d'une fibre à cristaux photoniques dans laquelle est injecté le flux lumineux émis par la source primaire laser, selon l'invention ;
- la figure 3 montre la répartition spectrale de l'intensité d'un faisceau lumineux en sortie d'une fibre à cristaux photoniques pour une puissance crête du flux lumineux primaire de 80 kW, selon un mode de mise en oeuvre de l'invention;
- la figure 4 représente la largeur spectrale $\Delta\lambda_F$ d'un flux lumineux en sortie d'une fibre à cristaux photoniques en fonction de la puissance crête d'un flux lumineux primaire incident, dans un mode de mise en oeuvre de l'invention;

Le but de l'invention est un élargissement spectral contrôlé d'un flux lumineux généré par une source laser, obtenu par l'optimisation des paramètres expérimentaux (puissance de la source laser, diamètre de coeur de la fibre, longueur de la fibre), de telle sorte que l'automodulation de phase soit principalement responsable de l'élargissement spectral, et non les autres processus physiques également observés dans la génération de supercontinuum (émission Raman stimulée, amplification paramétrique, mélange à 4 ondes, etc.).

La source laser ultrabrève à spectre large de l'invention associe une source laser 1 utilisant des ions terre rare à une fibre optique à cristaux photoniques 2. Cette fibre à cristaux photoniques 2 est une fibre 3 avantageusement en silice présentant un réseau périodique de cavités 4 qui lui assurent des propriétés optiques particulières. Il est ainsi possible d'élargir le spectre d'un flux lumineux introduit dans celle-ci de façon extrêmement importante. Cet élargissement, selon l'invention, est dû pour plus de 50%, et de préférence à plus de 80%, à l'auto-modulation de phase. Un dispositif de filtres en longueur d'onde permet alors si nécessaire de sélectionner une longueur d'onde d'émission particulière. La source laser ultrabrève comporte une source primaire 6. On appelle - source primaire - une source laser ultrabrève à ions terre rare. Cette source primaire 6 émet un flux lumineux primaire 7 centré sur une longueur d'onde $\lambda_L$ de largeur spectrale $\Delta\lambda_L$. $\lambda_L$ est typiquement compris entre 1000 et 1100 nm et $\Delta\lambda_L$ est typiquement de l'ordre de quelques nm. La source primaire 6 comporte un matériau actif pompé par une source laser de pompe 8. Cette source laser de pompe 8 est un laser solide émettant un flux lumineux de pompe 9 centré sur une longueur d'onde $\lambda_D$. Dans un mode de réalisation préféré, la source laser de pompe 8 est un laser semi-conducteur. La longueur d'onde $\lambda_D$ sur laquelle est centrée le flux lumineux de pompe 9 est typiquement comprise entre 800 nm et 1 $\mu$m. Les ions terre rare utilisés dans le matériau actif de la source primaire sont choisis parmi un des matériaux suivants : Ytterbium (Yb), Néodyme (Nd) ou tout autre matériau équivalent.

La source laser ultrabrève comprend également une optique d'injection 10 envoyant le flux lumineux primaire 7 centré sur une longueur d'ondé $\lambda_L$ et émis par la source laser primaire 6 dans une fibre à cristaux photoniques 2. A titre d'exemple non limitatif, cette optique d'injection 10 comporte au moins une lentille. La fibre à cristaux photoniques 2 a une longueur L et une section d. De préférence, la longueur L de la fibre à cristaux photoniques 2 vérifie $5 \leq L \leq 40$ cm. La fibre à cristaux photoniques 2 comprend un réseau périodique de cavités 4 de diamètre $\phi$ qui sont des trous remplis d'air parcourant toute la longueur L de ladite fibre 2. Avantageusement, le coeur de la fibre à cristaux photoniques 2 ne comporte pas de cavité supplémentaire 11. Dans un mode de réalisation préféré, la fibre à cristaux photoniques 2 est en silice. Dans un autre mode de réalisation, le matériau constitutif de la fibre à cristaux photoniques 2 est le verre ou tout autre matériau équivalent. Dans un mode de réalisation, la géométrie et le diamètre de ces cavités 4 ainsi que la longueur et la section d de la fibre à cristaux photoniques 2 sont pris tels que la fibre 2 présente une dispersion en valeur absolue inférieure à la dispersion d'une fibre optique homogène de même matériau et de longueur L pour la longueur d'onde $\lambda_L$. Dans le cas de la silice, par exemple, la dispersion est en valeur absolue inférieure à 40 ps/km/nm à une longueur d'onde $\lambda_L$ = 1025nm. Préférentiellement, la géométrie et le diamètre des cavités 4 ainsi que la longueur et la section d de la fibre à cristaux photoniques 2 sont pris tels que la fibre 2 présente une dispersion nulle pour la longueur d' onde $\lambda_L$. Il est alors possible d'obtenir un élargissement spectral extrêmement important du flux lumineux primaire 7. Cet élargissement reste très important même pour un flux lumineux primaire 7 présentant une puissance crête limitée. Avantageusement, la densité de puissance du flux lumineux primaire 7 est inférieure à 600 Gigawatts/cm$^2$.

En sortie de la fibre à cristaux photoniques 2, la largeur spectrale $\Delta\lambda_F$ du flux lumineux 12 est comprise entre 10 et 400 nm. Elle s'étend donc au maximum entre 900 et 1300 nm et typiquement entre 950 et 1150 nm. Cet élargissement spectral est centré sur une longueur d'onde $\lambda_F$ et a lieu de part et d'autre de la longueur d'onde $\lambda_L$.

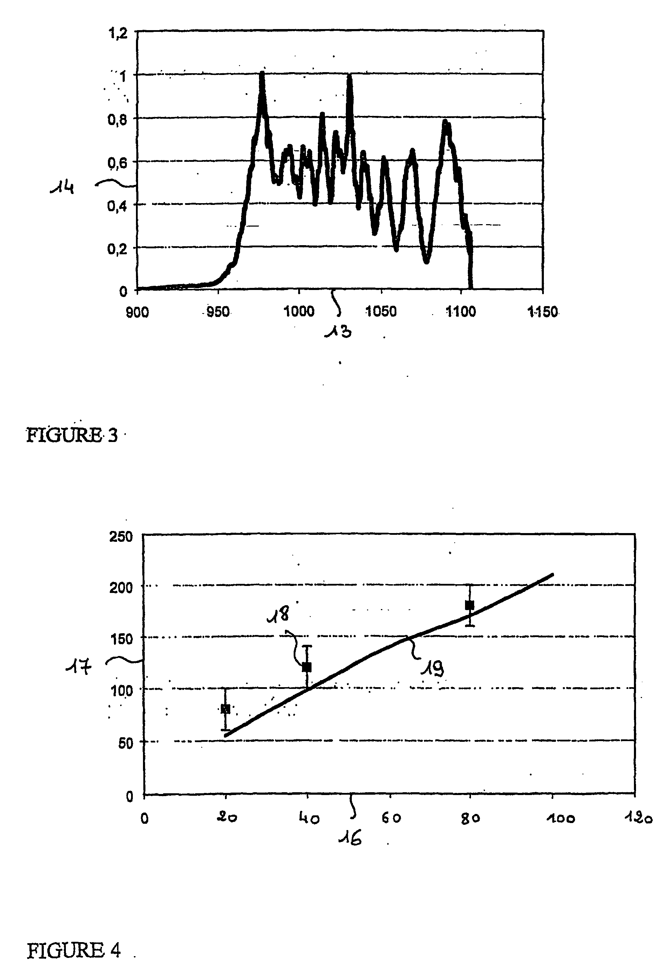

La Figure 3 montre la répartition spectrale de l'intensité en sortie d'une fibre à cristaux photoniques 2 pour une puissance crête du flux lumineux primaire 7 de 80 kW. La fibre, à cristaux photoniques 2 a une longueur de 10 cm et présente un coeur de diamètre $\phi$ = 5,5 $\mu$m. L'axe des abscisses 13 représente la longueur d'onde, en nanomètre (nm), et l'axe des ordonnées 14 l'intensité, en unités arbitraires, du flux lumineux 12 en sortie de la fibre à cristaux photoniques 2. Le support spectral du spectre élargi est parfaitement délimité entre 950 nm et environ 1110 nm. Cette répartition spectrale en intensité présente des modulations d'amplitude ayant une période moyenne $\tau$. On entend par "période moyenne", la moyenne des périodes des modulations d'amplitudes observées dans le spectre.

Une optique de couplage 15 est placée en sortie de la fibre 2 à cristaux photoniques pour collecter le flux lumineux 12. Ce flux lumineux 12 est centré sur une longueur d'onde $\lambda_F$ et a une largeur spectrale $\Delta\lambda_F$. Avantageusement, la source laser ultrabrève comporte un dispositif de sélection en longueur d'onde. En sortie de ce dispositif de sélection, le flux lumineux émis par la source laser est centré sur une longueur d'onde $\lambda_s$ et a une largeur spectrale $\Delta\lambda_s$. La bande passante de chaque filtre utilisé est avantageusement adaptée à la période moyenne $\tau$ des modulations du spectre de largeur $\Delta\lambda_F$ du flux lumineux 12 (Figure 3).

Dans un mode de réalisation préféré, le dispositif de sélection en longueur d'onde comprend un réseau de filtres interférentiels. L'accordabilité en longueur d'onde est par exemple obtenue par rotation du filtre interférentiel, de façon à modifier l'angle d'incidence du faisceau 12-à spectre large sur le filtre. On peut en particulier optimiser les conditions d'élargissement pour ajuster les maxima du spectre de la Figure 3, de façon à ce qu'ils correspondent aux longueurs d'ondes de transmission maximale des filtres.

Une approche théorique a été développée pour expliquer l'élargissement spectral observé du flux lumineux primaire 7 injecté dans la fibre à cristaux photoniques 2. Selon cette théorie, les cavités 4 forment un réseau périodique de défauts créant une bande interdite photonique dans la fibre 2. Des modes électromagnétiques ayant des fréquences comprises dans ladite bande interdite peuvent alors se propager le long de ces défauts. La longueur de la fibre à cristaux photoniques est suffisamment courte et la densité de puissance du flux lumineux primaire 7 injecté dans la fibre à cristaux photoniques 2 est telle que les effets non linéaires sont principalement dus à l'auto-modulation de phase. Ces effets non linéaires se cumulent tout au long de la propagation dudit flux lumineux primaire 7 pour conduire à un élargissement spectral. Les autres processus physiques généralement observés dans la génération du supercontinuum tels que l'Emission Raman Stimulée, l'amplification paramétrique, les mélanges à quatre ondes et les ondes de choc optique ne présentent qu'une contribution faible à l'élargissement spectral.

Dans le cas d'un élargissement uniquement lié à l'auto-modulation de phase, la phase d'une impulsion lumineuse ultrabrève se propageant dans un milieu non linéaire tel une fibre optique dépend de l'intensité par la relation :

$$\Delta\Phi(t) = \frac{2\pi}{\lambda}n_2 I(t)L$$

où $\lambda$ est la longueur d'onde de l'impulsion, $n_2$ l'indice non linéaire du milieu de propagation, $I(t)$ l'intensité lumineuse à l'instant t, et L la longueur du matériau traversée.

La variation de fréquence associée est alors donnée par :

$$\Delta\omega(t) = -\omega_0 \frac{n_2 L}{c} \frac{dI(t)}{dt}$$

et le spectre de l'impulsion correspondante est alors donné par la transformée de Fourier de la fonction $A(\nu)$ :

$$\Delta\omega\,(\upsilon) = TF\,[A(\upsilon)]$$

Dans un exemple de mise en oeuvre, la Figure 4 montre la largeur du spectre en fonction de la puissance crête du flux lumineux primaire pour une fibre à cristaux photoniques 2 de longueur 10 cm et présentant un coeur de diamètre $\phi$ = 5,5 $\mu$m. L'axe des ordonnées 17 représente la largeur spectrale $\Delta\lambda_F$, en nm, du flux lumineux 12 en sortie de la fibre à cristaux photoniques 2 et l'axe des abscisses 16 représente la puissance incidente, en kWatt, du flux lumineux primaire 7 injecté dans ladite fibre. Les points de mesure 18 correspondent à des mesures expérimentales réalisées pour des valeurs de puissance crête du flux lumineux primaire 7 données. Les incertitudes sur la valeur mesurée de la largeur spectrale $\Delta\lambda_F$ ont été portées sur la figure par des barres d'erreurs. Le profil 19 (trait plein) est le résultat d'une modélisation de l'élargissement uniquement lié à l'auto-modulation de phase et dont le modèle a été décrit plus haut. A titre d'exemple et aux valeurs d'incertitude près, pour une puissance crête incidente de 80 kW, la valeur du point de mesure est supérieure d'environ 10% à la valeur de l'élargissement spectral obtenue par le modèle décrivant l'auto-modulation de phase.

L'invention concerne également un dispositif de mesure d'un échantillon par microscopie confocale multiphotonique. L'arrangement comprend un microscope comportant un objectif et une source laser ultrabrève, émettant un flux lumineux d'excitation centré sur une longueur d'onde $\lambda_s$ et de largeur spectrale $\Delta\lambda_s$. Cette source laser ultrabrève comprend une source primaire laser 6 à ions terre rare recevant un flux lumineux de pompe 9 émis par une source de pompe laser 8 solide. Cette source primaire 6 comporte un matériau actif et émet un flux lumineux primaire 7 centré sur une longueur d'onde $\lambda_L$ de largeur spectrale $\Delta\lambda_L$. Une optique d'injection 10 envoie le flux lumineux primaire 7 émis par la source primaire 6 dans une fibre à cristaux photoniques 2 et une optique de couplage 15 collecte le flux lumineux 12 à la sortie de cette fibre à cristaux photoniques 2. Dans un mode de réalisation préféré, le spectre subit dans la fibre à cristaux photoniques 2 un élargissement dû pour plus de 50% à l'auto-modulation de phase. La contribution à l'élargissement spectral de l'auto-modulation de phase est de préférence supérieure à 80% Des moyens aptes à diriger ledit flux lumineux d'excitation envoient celui-ci sur un échantillon au travers du microscope. Avantageusement, l'échantillon est placé dans le plan focal de l'objectif. L'interaction du flux lumineux d'excitation avec l'échantillon à analyser crée un volume confocal d'analyse. Des moyens assurent la détection de l'intensité du flux lumineux produit par l'interaction du flux lumineux d'excitation centré sur la longueur d'onde $\lambda_s$ avec l'échantillon et collecté par le microscope. Ces moyens comportent avantageusement des capteurs CCD ou des photomultiplicateurs. Des moyens de traitement permettent l'analyse du signal produit par les moyens de détection.

Associé à la résolution spatiale du microscope confocal, l'utilisation de flux lumineux de durée ultrabrève permet, selon un mode de mise en oeuvre, l'étude des phénomènes chimiques cellulaires in vivo. Le flux lumineux détecté est dans un mode de mise en oeuvre un flux luminescent produit par les particules d'intérêt dans le volume confocal. Ce flux luminescent résulte de la fluorescence générée par l'absorption par les particules d'intérêt d'au moins deux photons. Sa densité n'est importante que dans le volume confocal d'analyse d'extension spatiale extrêmement réduite. La détérioration possible de, l'échantillon est ainsi limitée.

De plus, le dispositif de mesure d'un échantillon par microscopie confocale multiphotonique présente les avantages ou peut avantageusement être mis en oeuvre dans les cas suivants :

### 1) Plage de longueur d'onde disponible

La mise en oeuvre d'une source laser accordable dans le domaine 1000-1200 nm offre des avantages intéressants dans le domaine de la microscopie multi-photons. Pour optimiser l'efficacité du processus d'imagerie, il convient de coupler le plus grand nombre de photons issus de la source laser au niveau de la cellule. Deux phénomènes contribuent à dégrader l'efficacité. de ce couplage. Il s'agit de la diffusion dans le tissu biologique, importante aux courtes longueurs d'ondes, et de l'absorption de l'eau, importante pour les longueurs d'onde supérieure à 1300 nm.

Le domaine de longueur d'onde de la source laser accordable correspond à un compromis qui maximise l'efficacité de couplage.

### 2) Mesure simultanée multi-longueur d'onde

Les sources laser traditionnellement utilisées en microscopie multiphotonique sont des sources accordables dans le domaine 750-1000 nm. Ces sources ne peuvent émettre simultanément plusieurs longueurs d' onde, et la mesure de fluorescence sur différents fluorochromes, dont le domaine spectral. d'excitation est différent, ne peut se faire que séquentiellement. Il faut donc réaliser une première mesure à une longueur d'onde $\lambda_1$, puis modifier la longueur d'onde d'émission du laser pour effectuer une deuxième mesure à une longueur d'onde $\lambda_2$, et ainsi de suite. On entend par "fluorochrome" toute molécule susceptible d'être excitée à une longueur d'onde donnée $\lambda_i$ et d'émettre un flux lumineux centré sur une longueur d'onde $\lambda_j$.

Le dispositif de mesure d'un échantillon par microscopie confocale multiphotonique permet avantageusement la mesure simultanée de la fluorescence , de différents flûorochromes dont le spectre d'excitation est différent.

### 3) Utilisation possible de nouveaux fluorochromes

La source laser permet également d'exciter la fluorescence de fluorochromes émettant dans la partie rouge du spectre visible, voire le proche infrarouge. Le spectre d'excitation de ces fluorochromes n'est pas compatible avec les sources traditionnelles.

### 4) Amélioration du bruit produit par autofluorescence

La mesure de la fluorescence émise par les fluorochromes est souvent rendue difficile par la présence d'autres espèces naturellement fluorescentes dans le tissu biologique. Cette fluorescence parasite, aussi appelée autofluorescence, réduit considérablement le rapport signal à bruit de la mesure.

Le tableau ci-dessous indique les sources principales d'autofluorescences, ainsi que les longueurs d'ondes d'excitation associée (Biophotonics International **8**; N° 7 (2001) p 42).

| Source d'autofluorescence | Longueur d'onde d'excitation (nm) |
|---|---|
| Flavines | 380-490 |
| NADH et NADPH | 360-390 |
| Lipofuscins | 360-490 |
| AGE | 320-370 |
| Elastine et collagène | 440-480 |
| Lignine | 488 |
| Chlorophylle | 488 |

Une longueur d'onde d'excitation supérieure à 1000 nm ne permet pas d'excitation par absorption à deux photons à une longueur d'onde inférieure à 500 nm. Les espèces autofluorescentes ne peuvent donc pas être excitées par la source laser, objet de l'invention. Le rapport signal à bruit entre la fluorescence du fluorochrome et le bruit généré par autofluorescence est grandement amélioré, ainsi que le contraste des images réalisées au moyen du microscope.

### 5) Possibilité de mesures FRET

Les mesures de transfert d'énergie par résonance de fluorescence (FRET) mettent en oeuvre un transfert d'énergie par fluorescence entre un fluorochrome donneur et un accepteur. Une source laser excite la fluorescence du donneur, et la fluorescence du donneur excite celle de l'accepteur.

Les spectres d'absorption et d'émission du donneur et de l'accepteur se recouvrent fréquemment Le dispositif de mesure d'un échantillon par microscopie confocale multiphotonique permet une excitation simultanée du donneur et de l'accepteur dans un but de calibrage et de contrôle.

### 6) Utilisation en microscope multiphotonique

L'utilisation du dispositif de mesure d'un échantillon par microscopie confocale multiphotonique permet d'exciter de nombreux fluorochromes par absorption à trois photons, et non par absorption à deux photons. Le volume confocal dans lequel la fluorescence peut avoir lieu est sensiblement plus faible dans le cas de l'absorption à trois photons, comparé au cas de l'absorption à deux photons. La résolution spatiale de la mesure est ainsi grandement améliorée.

**Revendications**

1.   Source laser ultrabrève compacte à spectre large comportant :

   -   une source primaire laser (6) recevant un flux lumineux de pompe (9) centré sur une longueur d'onde $\lambda_D$, ledit

flux (9) étant émis par une source de pompe laser (8) solide, ladite source primaire (6) comportant un matériau actif et émettant un flux lumineux primaire (7) . centré sur une longueur d'onde $\lambda_L$ de largeur spectrale $\Delta\lambda_L$,

- une fibre à cristaux photoniques (2) ayant une longueur L, une section d, et un ensemble de cavités (4) de diamètre $\phi$,
- une optique d'injection (10) envoyant le flux lumineux primaire (7) émis par la source primaire (6) dans la fibre à cristaux photoniques (2),
- une optique de couplage (15) collectant le flux lumineux (12) à la sortie de la fibre à cristaux photoniques (2), ledit flux (12) étant centré sur une longueur d'onde $\lambda_F$ et de largeur spectrale $\Delta\lambda_F$.

**caractérisée en ce que** la source primaire laser est à ions terre rare et **en ce que** la longueur L, la section d, le diametre $\phi$, l'espacement entre les cavités et le flux lumineux primaire sont choisis de manière à ce que le spectre subit dans la fibre à cristaux photoniques (2) un élargissement dû pour plus de 50% à l'auto-modulation de phase.

2. Source laser ultrabrève à spectre large selon la revendication 1, **caractérisée en ce que** la contribution à l'élargissement du spectre de l'auto-modulation de phase est supérieure à 80%.

3. Source laser ultrabrève à spectre large selon la revendication 1 ou 2, **caractérisée en ce que** la longueur L de la fibre à cristaux photoniques (2) vérifie $5 \leq L \leq 40$ cm et la densité de puissance du flux lumineux primaire (7) incident est inférieure à 600 Gigawatts/cm$^2$.

4. Source laser ultrabrève à spectre large selon l'une quelconque des revendications 1 à 3, **caractérisée en ce qu'**elle comporte un dispositif de sélection en longueur d'onde.

5. Source laser ultrabrève à spectre large selon la revendication 4, **caractérisée en ce que** le dispositif de sélection en longueur d'onde comprend un réseau de filtres interférentiels.

6. Source laser ultrabrève à spectre large selon la revendication 5, **caractérisée en ce que** ledit flux (12) de largeur spectrale $\Delta\lambda_F$ présente des modulations en amplitude de période moyenne $\tau$ et que la bande passante de chaque filtre est adaptée à cette période moyenne $\tau$.

7. Source laser ultrabrève à spectre large selon l'une quelconque des revendications 1 à 6, **caractérisée en ce que** la source de pompe laser (8) solide est un laser semi-conducteur.

8. Source laser ultrabrève à spectre large selon l'une quelconque des revendications 1 à 7, **caractérisée en ce que** le matériau actif comprend des ions ytterbium.

9. Source laser ultrabrève à spectre large selon l'une quelconque des revendications 1 à 7, **caractérisée en ce que** le matériau actif comprend des ions néodyme.

10. Source laser ultrabrève à spectre large selon l'une quelconque des revendications 1 à 9, **caractérisée en ce que** la largeur spectrale $\Delta\lambda_F$ est comprise entre 10 et 400 nm.

11. Source laser ultrabrève à spectre large selon l'une quelconque des revendications 1 à 10, **caractérisée en ce que** le diamètre $\phi$ des cavités (4), la longueur L et la section d de la fibre à cristaux photoniques (2), l'espacement entre les cavités (4) sont pris tels que la dispersion du flux lumineux primaire (7) centré sur la longueur d'onde $\lambda_L$ dans ladite fibre à cristaux photoniques (2) est en valeur absolue inférieure à la dispersion d'une fibre optique homogène de même matériau et de longueur L pour la longueur d'onde $\lambda_L$.

12. Source laser ultrabrève à spectre large selon la revendication 11, **caractérisée en ce que** la dispersion du flux lumineux primaire (7) centré sur la longueur d'onde $\lambda_L$ dans la fibre à cristaux photoniques (2) est nulle.

13. Dispositif de mesure d'un échantillon par microscopie confocale multiphotonique comprenant :

- un microscope confocal comportant un objectif,
- une source de lumière émettant un flux lumineux,
- des moyens aptes à diriger ledit flux lumineux sur un échantillon au travers du microscope,
- des moyens de détection de l'intensité du flux lumineux produit par l'interaction du faisceau lumineux émis par la source de lumière sur l'échantillon et collecté par le microscope,

- des moyens de traitement du signal produit par les moyens de détection,

  **caractérisé en ce que** la source de lumière comprend :

- une source laser (6) selon l'une quelconque des revendications 1 à 3.

**Patentansprüche**

1. Kompakte Ultrakurzpulslaserquelle mit breitem Spektrum, umfassend:

   - eine primäre Laserquelle (6), die einen Pumpenlichtstrom (9) empfängt, der auf einer Wellenlänge $\lambda_D$ zentriert ist, wobei der Strom (9) von einer festen Laserpumpenquelle (8) emittiert wird, wobei die primäre Quelle (6) ein Aktivmaterial umfasst und einen primären Lichtstrom (7) emittiert, der auf einer Wellenlänge $\lambda_L$ mit einer Spektralbreite $\Delta\lambda_L$ zentriert ist,

   - eine Faser mit Photonenkristallen (2) mit einer Länge L, einem Querschnitt d und einer Menge an Hohlräumen (4) mit einem Durchmesser $\Phi$,

   - eine Injektionsoptik (10), die den primären Lichtstrom (7), der von der primären Quelle (6) emittiert wird, in die Faser mit Photonenkristallen (2) schickt,

   - eine Kopplungsoptik (15), die den Lichtstrom (12) am Ausgang der Faser mit Photonenkristallen (2) sammelt, wobei der Strahl (12) auf einer Wellenlänge $\lambda_F$ mit einer Spektralbreite $\Delta\lambda_F$ zentriert ist,

   **dadurch gekennzeichnet, dass** die primäre Laserquelle Ionen seltener Erden hat und dass die Länge L, der Querschnitt d, der Durchmesser $\Phi$, der Abstand zwischen den Hohlräumen und der primäre Lichtstrom derart gewählt wird, dass das Spektrum in der Faser (2) mit Photonenkristallen einer Erweiterung unterliegt, die zu mehr als 50 % auf die Autophasenmodulation zurückgeht.

2. Ultrakurzpulslaserquelle mit breitem Spektrum nach Anspruch 1, **dadurch gekennzeichnet, dass** der Beitrag der Autophasenmodulation zur Erweiterung des Spektrums über 80 % liegt.

3. Ultrakurzpulslaserquelle mit breitem Spektrum nach Anspruch 1 oder 2, **dadurch gekennzeichnet, dass** die Länge L der Faser (2) mit Photonenkristallen $5 \leq L \leq 40$ beträgt und die Leistungsdichte des eintreffenden primären Lichtstroms (7) geringer als 600 Gigawatt/cm$^2$ ist.

4. Ultrakurzpulslaserquelle mit breitem Spektrum nach einem der Ansprüche 1 bis 3, **dadurch gekennzeichnet, dass** sie eine Wellenlängenauswahlvorrichtung umfasst.

5. Ultrakurzpulslaserquelle mit breitem Spektrum nach Anspruch 4, **dadurch gekennzeichnet, dass** die Wellenlängenauswahlvorrichtung ein Netz von Interferenzfiltern umfasst.

6. Ultrakurzpulslaserquelle mit breitem Spektrum nach Anspruch 5, **dadurch gekennzeichnet, dass** der Lichtstrom (12) mit der Spektralbreite $\Delta\lambda_F$ Amplitudenmodulationen mit einer mittleren Periode $\tau$ aufweist und dass das Durchlassband jedes Filters an diese mittlere Periode $\tau$ angepasst ist.

7. Ultrakurzpulslaserquelle mit breitem Spektrum nach einem der Ansprüche 1 bis 6, **dadurch gekennzeichnet, dass** die feste Laserpumpenquelle (8) ein Halbleiterlaser ist.

8. Ultrakurzpulslaserquelle mit breitem Spektrum nach einem der Ansprüche 1 bis 7, **dadurch gekennzeichnet, dass** das Aktivmaterial Ytterbiumionen aufweist.

9. Ultrakurzpulslaserquelle mit breitem Spektrum nach einem der Ansprüche 1 bis 7, **dadurch gekennzeichnet, dass** das Aktivmaterial Neodymionen umfasst.

10. Ultrakurzpulslaserquelle mit breitem Spektrum nach einem der Ansprüche 1 bis 9, **dadurch gekennzeichnet,**

**dass** die Spektralbreite $\Delta\lambda_F$ zwischen 10 und 400 nm liegt.

**11.** Ultrakurzpulslaserquelle mit breitem Spektrum nach einem der Ansprüche 1 bis 10, **dadurch gekennzeichnet, dass** der Durchmesser $\Phi$ der Hohlräume (4), die Länge L und der Querschnitt d der Faser mit Photonenkristallen (2), der Abstand zwischen den Hohlräumen (4) derart gewählt werden, dass die Dispersion des primären Lichtstroms (7), der auf der Wellenlänge $\lambda_L$ zentriert ist, in der Faser (2) mit Photonenkristallen im Absolutwert geringer als die Dispersion einer homogenen optischen Faser aus demselben Material und mit der Länge L für die Wellenlänge $\lambda_L$ ist

**12.** Ultrakurzpulslaserquelle mit breitem Spektrum nach Anspruch 11, **dadurch gekennzeichnet, dass** die Dispersion des primären Lichtstroms (7), der auf der Wellenlänge $\lambda_L$ zentriert ist, in der Faser (2) mit Photonenkristallen gleich Null ist.

**13.** Messvorrichtung für ein Muster durch konfokale Multiphotonenmikroskopie, umfassend:

- ein konfokales Mikroskop mit einem Objektiv,
- eine Lichtquelle, die einen Lichtstrom aussendet,
- Mittel, die den Lichtstrahl auf ein Muster durch das Mikroskop lenken können,
- Mittel zur Erfassung der Stärke des Lichtstroms, der durch Interaktion des von der Lichtquelle auf das Muster gesendeten und vom Mikroskop gesammelten Lichtbündels erzeugt wird,
- Mittel zur Bearbeitung des von den Erfassungsmitteln erzeugten Signals,

**dadurch gekennzeichnet, dass** die Lichtquelle umfasst:

- eine Laserquelle (6) nach einem der Ansprüche 1 bis 3.

**Claims**

**1.** A wide spectrum ultrashort compact laser source comprising:

- a laser primary source (6) receiving a luminous pump flux (9) centred on a wavelength $\lambda_D$, said flux (9) being emitted by a solid laser pump source (8), said primary source (6) comprising an active material and emitting a primary luminous flux (7) centred on a wavelength $\lambda_L$ of spectral width $\Delta\lambda_L$,
- a photonic crystal fibre (2) having a length L, a section d, and a set of cavities (4) of diameter $\phi$,
- injection optics (10) sending the primary luminous flux (7) emitted by the primary source (6) to the photonic crystal fibre (2),
- coupling optics (15) collecting the luminous flux (12) at the output of the photonic crystal fibre (2), said flux (12) being centred on a wavelength $\lambda_F$ and of spectral width $\Delta\lambda_F$,

    **characterised in that** the laser primary source is with rare earth ions and **in that** the length L, the section d, the diameter $\phi$, the spacing between the cavities and the primary luminous flux are selected such as the spectrum is subjected in the photonic crystal fibre (2) to a widening due for more than 50% of the phase self-modulation.

**2.** A wide spectrum ultrashort laser source according to claim 1, **characterised in that** the contribution to the widening of the spectrum of the phase self-modulation is greater than 80%.

**3.** A wide spectrum ultrashort laser source according to claim 1 or 2, **characterised in that** the length L of the photonic crystal fibre (2) verifies $5 \leq L \leq 40$ cm and the power density of the primary luminous flux (7) incident is smaller than 600 Gigawatts/cm$^2$.

**4.** A wide spectrum ultrashort laser source according to any one of claims 1 to 3, **characterised in that** it comprises a wavelength selection device.

**5.** A wide spectrum ultrashort laser source according to claim 4, **characterised in that** the wavelength selection device comprises an assembly of interferential filters.

**6.** A wide spectrum ultrashort laser source according to claim 5, **characterised in that** said flux (12) of spectral width

$\Delta\lambda_F$ exhibits amplitude modulations of average period $\tau$ and that the pass-band of each filter is adapted to this average period $\tau$.

**7.** A wide spectrum ultrashort laser source according to any one of claims 1 to 6, **characterised in that** the solid laser pump source (8) is a semiconductor laser.

**8.** A wide spectrum ultrashort laser source according to any one of claims 1 to 7, **characterised in that** the active material comprises ytterbium ions.

**9.** A wide spectrum ultrashort laser source according to any one of claims 1 to 7, **characterised in that** the active material comprises neodymium ions.

**10.** A wide spectrum ultrashort laser source according to any one of claims 1 to 9, **characterised in that** the spectral width $\Delta\lambda_F$ ranges between 10 and 400 nm.

**11.** A wide spectrum ultrashort laser source according to any one of claims 1 to 10, **characterised in that** the diameter $\phi$ of the cavities (4), the length L and the section d of the photonic crystal fibre (2), the spacing between the cavities (4) are selected so that the dispersion of the primary luminous flux (7) centred on the wavelength $\lambda_L$ in said photonic crystal fibre (2) is in absolute value smaller than the dispersion of a homogeneous optic fibre of the same material and of length L for the wavelength $\lambda_L$ .

**12.** A wide spectrum ultrashort laser source according to claim 11, **characterised in that** the dispersion of the primary luminous flux (7) centred on the wavelength $\lambda_L$ in the photonic crystal fibre (2) is nil.

**13.** A sample measuring device using multiphotonic confocal microscopy comprising:

- a confocal microscope including a lens,
- a light source emitting a luminous flux,
- means capable of directing said luminous flux to a sample through the microscope,
- means for detecting the intensity of the luminous flux produced by the interaction of the luminous beam emitted by the light source on the sample and collected by the microscope,
- means for processing the signal produced by the means of detection,

  **characterised in that** the light source comprises:

- a laser source (6) according to any one of claims 1 to 3.

FIGURE 1

EP 1 419 415 B1

FIGURE 2

12

FIGURE 3

FIGURE 4